# EUROPEAN PATENT APPLICATION

(11) **EP 1 816 495 A1**
(43) Date of publication of application: **08.08.2007**
(21) Application number: 07250427.7
(22) Date of filing: 01.02.2007
(51) Int. Cl.: G02B 5/22, H01J 17/49

(54) **Optical filter and plasma display panel employing the same**

(30) Priority: 01.02.2006 KR 20060009813
(71) Applicant: Samsung SDI Co., Ltd., Suwon-si, Gyeonggi-do (KR)
(72) Inventor: Shim, Myun-Gi, c/o Samsung SDI Co., Ltd., Suwon-si Gyeonggi-do (KR); Moon, Dong-Gun, c/o Samsung SDI Co., Ltd., Suwon-si Gyeonggi-do (KR); Cha, Jun-Kyu, c/o Samsung SDI Co., Ltd., Suwon-si Gyeonggi-do (KR); Park, Hyun-Ki, c/o Samsung SDI Co., Ltd., Suwon-si Gyeonggi-do (KR); Lim, Ik-Chul, c/o Samsung SDI Co., Ltd., Suwon-si Gyeonggi-do (KR)
(74) Representative: Mounteney, Simon James

(57) **Abstract**

An optical filter and a plasma display panel (PDP) employing the same, where the optical filter includes a substrate and a selective absorption layer having a maximum transmittance of about 50% or less in a wavelength range of from about 450 nm to about 680 nm, and wherein a difference between a maximum transmittance and a minimum transmittance at about 450 nm, about 530 nm, and about 630 nm is about 10 % or less.

## Description

### BACKGROUND OF THE INVENTION

### 1. Field of the Invention

The present invention relates to an optical filter and a plasma display panel employing the same. More particularly, the present invention relates to an optical filter capable of increasing color sensitivity and contrast in a plasma display panel.

### 2. Description of the Related Art

A plasma display panel (PDP) refers to a display panel capable of displaying images using plasma gas emission, thereby providing superior display characteristic, such as large/thin screens, wide viewing angles, high-definition capabilities, and so forth.

A conventional PDP may include a filter with a plurality of thin layers. Such a conventional filter may control external light transmittance into the PDP to reduce light reflection and, thereby, improve image quality and clarity of the PDP. Additionally, such a conventional filter may shield the display from electromagnetic waves generated during the plasma emission and, thereby, improve color purity and contrast of images displayed by the PDP.

In particular, a conventional PDP filter may include a predetermined amount of coloring matter in order to reduce light transmittance through the filter. The coloring matter of the conventional filter may be coated or distributed in an adhesive.

However, improper use of coloring matter may not be beneficial. For example, an excess amount of the coloring matter may trigger intense light absorption at specific wavelengths and increased white light temperature, thereby distorting color balance, i.e., providing unnatural colors, and image quality of the PDP. However, an insufficient amount of the coloring matter may have inadequate effect on the color contrast and sensitivity. For example, when excess amount of coloring matter is employed to increase absorbance of red light, e.g., light at a wavelength of about 590 nm, the filter may provide images with strong red shades, thereby decreasing the image quality and the overall value of the PDP.

Accordingly, there exists a need to provide a filter for a PDP capable of increasing color sensitivity and contrast in a plasma display panel, while maintaining good color balance.

### SUMMARY OF THE INVENTION

The present invention is therefore directed to an optical filter and a plasma display panel which substantially overcome one or more of the disadvantages of the related art.

It is therefore a feature of an embodiment of the present invention to provide a filter capable of improving color sensitivity and contrast in a PDP display.

It is another feature of an embodiment of the present invention to provide a PDP display having a filter capable of improving image quality thereof.

According to a first aspect of the invention there is provided an optical filter as set out in Claim 1. Preferred features of the ivnetion are set out in Claims 2 to 9.

According to a second aspect of the invention there is provided an optical filter as set out in Claim 10. Preferred features of the ivnetion are set out in Claims 11 to 13.

According to a third aspect of the invention there is provided a plasma display panel as set out in Claim 14.

### BRIEF DESCRIPTION OF THE DRAWINGS

The above and other features and advantages of the present invention will become more apparent to those of ordinary skill in the art by describing in detail exemplary embodiments thereof with reference to the attached drawings, in which:

FIG. 1 illustrates a cross-sectional view of an optical filter according to an embodiment of the present invention;

FIG. 2 illustrates a perspective view of a plasma display panel having an optical filter according to an embodiment of the present invention; and

FIG. 3 illustrates a graph showing the transmittance of each wavelength of optical filters of Comparative Example 1, Comparative Example 2, and Example 1.

### DETAILED DESCRIPTION OF THE INVENTION

The present invention will now be described more fully hereinafter with reference to the accompanying drawings, in which exemplary embodiments of the invention are illustrated. The invention may, however, be embodied in different forms and should not be construed as limited to the embodiments set forth herein. Rather, these embodiments are provided so that this disclosure will be thorough and complete, and will fully convey the scope of the invention to those skilled in the art.

In the figures, the dimensions of layers and regions may be exaggerated for clarity of illustration. It will also be understood that when a layer or an element is referred to as being "on" another layer, element or substrate, it can be directly on the other layer, element or substrate, or intervening layers or elements may also be present. Further, it will be understood that when a layer or an element is referred to as being "under" another layer or element, it can be directly under, or one or more intervening layers or elements may also be present. In addition, it will also be understood that when a layer or an element is referred to as being "between" two layers or elements, it can be the only layer or element between the two layers or elements, or one or more intervening layers or elements may also be present. Like reference numerals refer to like elements throughout.

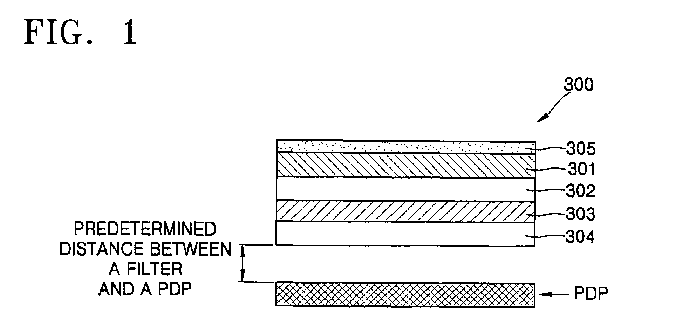

An optical filter according to an embodiment of the present invention is more fully described below with reference to FIG. 1. As illustrated in FIG. 1, an optical filter 300 according to an embodiment of the present invention includes a substrate 302 and a selective absorption layer 303.

The substrate 302 may be made of any suitable transparent material, e.g., polyethylene terephthalate (PET), tri-acetyl-cellulose (TAC), polyvinyl alcohol (PVA), polyethylene (PE), and so forth, to a thickness of about 10 µm to about 1000 µm.

The selective absorption layer 303 of the optical filter 300 may include a chromophore, e.g., a tetraazaporphyrin compound, capable of absorbing light at a predetermined wavelength and adjusting transmittance thereof. The selective absorption layer 303 in this embodiment is deposited on the substrate 302 to a thickness of from about 1 µm to about 100 µm via an adhesion layer (not shown), e.g., acrylic resin, polyester resin, epoxy resin, urethane resin, and so forth, having a thickness of from about 1 µm to about 100 µm in order to enhance adhesion between the substrate 302 and the selective absorption layer 303.

The filter 300 having the above structure according to an embodiment of the present invention has a filter transmittance spectrum having a maximum transmittance of about 50% or less in a wavelength range of about 450 nm to about 680 nm, while a difference between a maximum transmittance and a minimum transmittance in the wavelength range of about 450 nm to about 680 nm may be about 10% or greater. The difference between the maximum transmittance and the minimum transmittance at predetermined wavelengths of 450 nm, 530 nm, and 630 nm is about 10% or less. It will be appreciated that the predetermined wavelengths 450 nm, 530, and 630 nm correspond to blue, green, and red light, respectively. On this basis, embodiments of the present invention provide optical filters for PDPs that are capable of maintaining good color balance by minimizing the difference between each transmittance of blue, green, and red light. It will also be appreciated that blue, green, and red light could also be defined by an appropriate wavelength range. For example, a range of 430 to 460 nm for blue, 495 to 560 nm for green, and 640 to 670 nm for red. The specific wavelengths 450 nm, 530, and 630 nm represent examples of chosen wavelengths within these ranges. In this respect, it should be noted that transmittance refers to a fraction of visible light transmitted through the optical filter. A maximum transmittance level refers to a maximum transmittance value in a specified wavelength range. Similarly, a minimum transmittance level refers to a minimum transmittance value in a specified wavelength range.

The optical filter 300 according to this embodiment of the present invention also includes an electromagnetic wave shield layer 301 to shield a PDP from static electricity and electromagnetic waves generated during plasma emission. In particular, the electromagnetic wave shield layer 301 may include a conductive layer, a fiber mesh, or a metal mesh, e.g., silver (Ag), copper (Cu), nickel (Ni), aluminum (Al), gold (Au), iron (Fe), indium (In), zinc (Zn), platinum (Pt), chromium (Cr), palladium (Pd), like metals, or a combination thereof, having a thickness of from about 1 µm to about 100 µm. Alternatively, the electromagnetic wave shield layer 301 may have a multi-layered film structure having a thickness of from about 10 nm to about 500 nm. The electromagnetic wave shield layer 301 may be deposited on a surface of the substrate 302, e.g., such that the substrate 302 may be positioned between the electromagnetic wave shield layer 301 and the selective absorption layer 303, via an adhesion layer as previously described with respect to application of the selective absorption layer 303.

The optical filter 300 according to this embodiment of the present invention also includes an anti-reflection layer 304. The anti-reflection layer 304 may minimize reflection of external light and, in particular, may reduce diffuse reflection which may influence contrast. The anti-reflection layer 304 may be a single layer or a multi-layer formed by depositing tin oxide (TiO₂), silicon dioxide (SiO₂), yttrium oxide (Y₂O₃), magnesium fluoride (MgF₂), aluminum-sodium-fluoride (Na₃AlF₆), aluminum oxide (Al₂O₃), bismuth oxide (Bi₂O₃), gadolinium oxide (Gd₂O₃), lanthanum fluoride (LaF₃), lead (II) telluride PbTe, antimony oxide (Sb₂O₃), silicon oxide (SiO), silicon nitride (SiNx), tantalum oxide (Ta₂O₅), zinc sulfide (ZnS), zinc selenide (ZnSe), zirconium oxide (ZrO₂), or a combination thereof to a thickness of from about 10 nm to about 100 nm. The anti-reflection layer 304 may be formed by any method as determined by one of ordinary skill in the art, e.g., coating, deposition, sputtering, and so forth.

The optical filter 300 according to this embodiment of the present invention also includes a near infrared shield layer 305 to block near infrared light, i.e., light in a wavelength range of about 800 nm to about 1200 nm, generated during plasma emission. The near infrared shield layer 305 has, in this embodiment, a transmittance of about 30% or less.

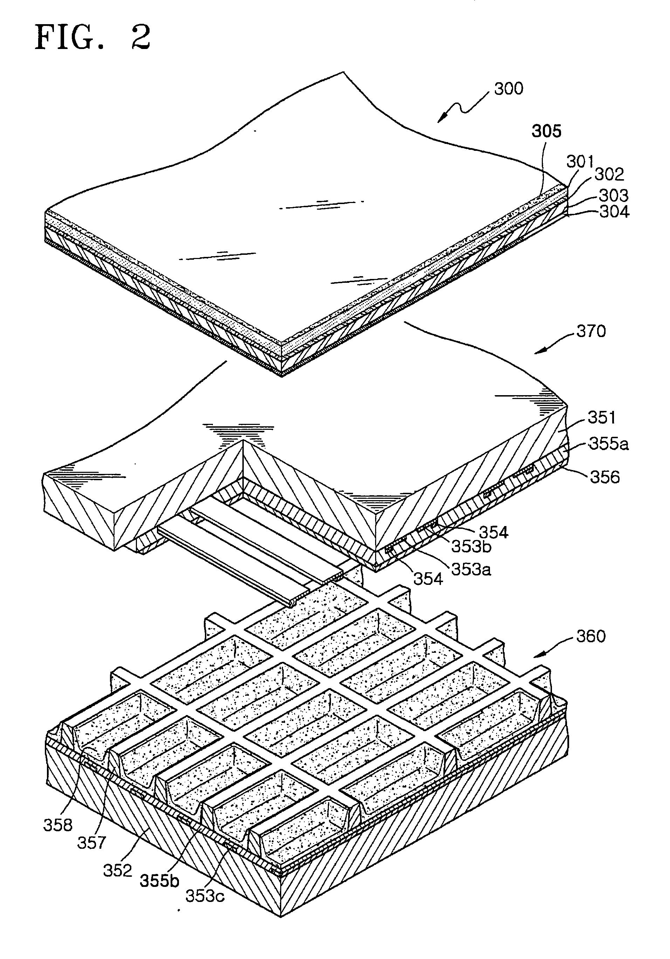

A plasma display panel (PDP) with an optical filter described previously with respect to FIG. 1, will be described in more detail below with respect to FIG. 2.

As illustrated in FIG. 2, the PDP according to an embodiment of the present invention includes a front panel 370, a rear panel 360 disposed in parallel to the front panel 370, and an optical filter 300 disposed at a predetermined distance from the front panel 370, i.e., the front panel 370 is positioned between the rear panel 360 and the filter 300. The optical filter 300 may be identical to the optical filter described previously with respect to FIG. 1, and, therefore, its detailed description will not be repeated herein.

The front panel 370 of the PDP according to an embodiment of the present invention includes a front substrate 351, a front dielectric layer 355a, a plurality of sustain electrode pairs 353a and 353b formed on a rear surface of the front substrate 351, i.e., between the front substrate 351 and the front dielectric layer 355a, and a protecting layer 356 in communication with the dielectric layer 355a. Additionally, the front panel 370 includes a bus electrode 354 formed of a highly conductive metal. Each of the sustain electrode pairs 353a and 353b may be formed of a transparent material, e.g., indium-tin-oxide (ITO), and so forth.

The rear panel 360 of the PDP according to this embodiment of the present invention may include a rear substrate 352, a rear dielectric layer 356b, a plurality of address electrodes 353c formed on a front surface of the rear substrate, i.e., between the rear substrate 352 and the rear dielectric layer 355b, a plurality of spacers 357 formed on the rear dielectric layer 355b to define light emitting cells, and a phosphor layer 358 disposed in each of the light emitting cells.

The plurality of address electrodes 353c may be parallel to one another and extend along the light emitting cells, such that the address electrodes 353c may be positioned in a perpendicular direction with respect to the sustain electrode pairs 353a and 353b. The front and rear panels 360 and 370 may be attached to one another, such that the plurality of electrodes and light-emitting cells with a discharge gas, e.g., xenon, neon, and so forth, may be positioned therebetween.

### EXAMPLES:

In the examples discussed below, exemplary materials may include the following. A coloring matter capable of absorbing light at 590 nm may include phorphyrins. Coloring matter capable of adjusting transmittance may include perinones, azo-metal complexes and anthraquinones. An acrylic adhesive may include an acrylate copolymer. An anti-reflection film may include alternating high reflective layers, e.g., SiO₂, and low reflective layers, e.g., fluorine compounds, on a transparent film, e.g., a PEF. An electromagnetic wave shield layer may be made of a metal, e.g., copper.

Example 1 - Manufacturing of an optical filter: a selective absorption layer was coated with a coloring matter capable of absorbing light at 590 nm and of adjusting transmittance. Next, the coated selective absorption layer was deposited onto a first surface of a 30 mm thick transparent glass substrate, while an acrylic resin was used as an adhesive.

An electromagnetic wave shield layer was deposited on a second surface of the glass substrate, i.e., a surface opposite to the surface coated with the selective absorption layer. The electromagnetic wave shield layer was formed in a mesh structure having a line width of 10 µm and a pitch of 300 µm.

Subsequently, a 100 µm thick anti-reflection film (manufactured by Japan Chemical Co., Ltd.), including an anti-reflection layer 300 nm thick, was deposited on the selective absorption layer using the acrylic resin as an adhesive, i.e., same acrylic resin employed during deposition of the selective absorption layer on the substrate.

Comparative Example 1: an optical filter having high transmittance was manufactured according to conventional technology. In particular, the conventional optical filter was manufactured in the same manner as in the filter of Example 1, with the exception that only coloring matter capable of absorbing light at 590 nm was used, i.e., a coloring matter capable of adjusting the transmittance was not employed.

Comparative Example 2: an optical filter having low transmittance was manufactured according to conventional technology. In particular, the conventional optical filter was manufactured in the same manner as the inventive filter in Example 1, with the exception that only coloring matter capable of absorbing light at 590 nm was used, i.e., a coloring matter adjusting the transmittance was not employed.

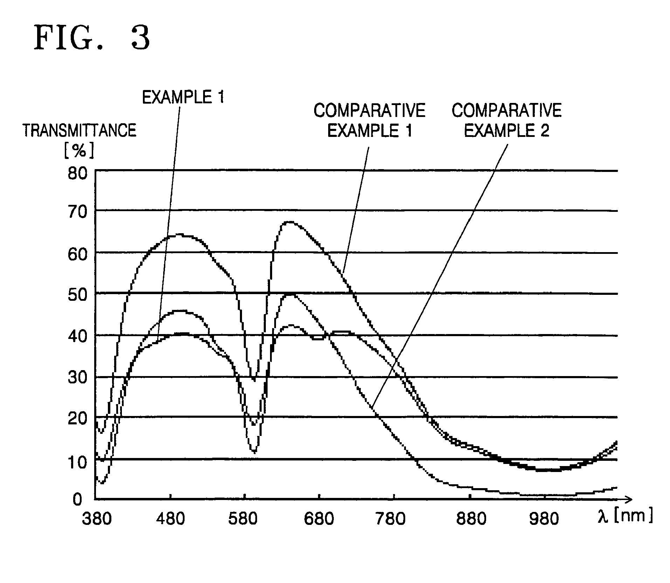

The visual color, the transmittance and the range of the color realization of each of the color filters manufactured according to Example 1 and Comparative Examples 1 and 2 were measured using a luminance meter, e.g., a BM7 manufactured by Topcon Corp. Results of the measurements are presented in Table 1 and plotted in FIG. 3.

**Table 1**

| Optical filter | Example 1 | Comparative Example 1 | Comparative Example 2 |
|---|---|---|---|
| Visual Color | Dark purple | Greenish purple | Purple |
| Transmittance | 35% | 51 % | 33% |
| Range of Color realization | CRT TV 8.8% improved PDP 8.0% improved | CRT TV 8.7% improved PDP 8.0% improved | CRT TV 13.5% improved PDP 12.3% improved |

As evident from Table 1 and FIG. 3, the optical filter according to the present invention can facilitate improvement of color sensitivity and contrast by adjusting the visual color, the transmittance, and the range of color realization, and moreover, can balance the color of the optical filter.

Accordingly, the optical filter of the present invention may enhance color sensitivity and contrast, while maintaining good color balance and image quality in a PDP.

Exemplary embodiments of the present invention have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. An optical filter, comprising:
a selective absorption layer having a maximum transmittance of about 50% or less in a wavelength range of from about 450 nm to about 680 nm, wherein a difference between a maximum transmittance and a minimum transmittance at about 450 nm, about 530 nm, and about 630 nm is about 10 % or less.

2. An optical filter as claimed in claim 1, wherein a difference between a maximum transmittance and a minimum transmittance in a wavelength range of from about 450 nm to about 680 nm is about 10% or greater.

3. An optical filter as claimed in claim 1 or 2, further comprising a near infrared shield layer.

4. An optical filter as claimed in claim 3, wherein the near infrared shield layer has a transmittance of about 30% or less in a range of from about 800 nm to about 1200 nm.

5. An optical filter as claimed in any one of claims 1 to 4, further comprising an electromagnetic wave shield layer.

6. An optical filter as claimed in claim 5, wherein the electromagnetic wave shield layer includes a fiber mesh, a metal mesh, or a conductive layer.

7. An optical filter as claimed in any one of claims 1 to 6, further comprising an anti-reflection layer.

8. An optical filter as claimed in claim 7, wherein the anti-reflection layer is a single layer or a multi-layer including tin oxide (TiO₂), silicon dioxide (SiO₂), yttrium oxide (Y₂O₃), magnesium fluoride (MgF₂), aluminum-sodium-fluoride (Na₃AlF₆), aluminum oxide (Al₂O₃), bismuth oxide (Bi₂O₃), gadolinium oxide (Gd₂O₃), lanthanum fluoride (LaF₃), lead (II) telluride PbTe, antimony oxide (Sb₂O₃), silicon oxide (SiO), silicon nitride (SiNx), tantalum oxide (Ta₂O₅), zinc sulfide (ZnS), zinc selenide (ZnSe), zirconium oxide (ZrO₂), or a combination thereof.

9. An optical filter as claimed in any one of claims 1 to 8, wherein the selective absorption layer includes a tetraazaporphyrin compound.

10. An optical filter, comprising:
a selective absorption layer having a difference of about 10% or more between a maximum transmittance and a minimum transmittance in a wavelength range of from about 450 nm to about 680 nm, and a difference of about 10% or less between a maximum transmittance and a minimum transmittance at about 450 nm, about 530 nm, and about 630 nm.

11. An optical filter as claimed in claim 10, wherein a maximum transmittance in a range of from about 450 nm to about 680 nm is about 50% or less.

12. An optical filter as claimed in claim 10 or 11, further comprising a near infrared shield layer, an electromagnetic wave shield layer, an anti-reflection layer, or a combination thereof.

13. An optical filter as claimed in any one of claims 10 to 12, further comprising a near infrared shield layer having a transmittance of about 30% or less in a range of from about 800 nm to about 1200 nm.

14. A plasma display panel, comprising:
a front substrate parallel to a rear substrate;
a plurality of electrodes between the front and rear substrates;
a plurality of discharge cells between the front and rear substrates; and
an optical filter according to any one of claims 1 to 13, wherein the optical filter is positioned at a predetermined distance from the front substrate.
